# FASCICULE DE BREVET EUROPEEN

(11) **EP 0 786 493 B1**
(45) Date de publication et mention de la délivrance du brevet: **09.05.2001**
(21) Numéro de dépôt: 97100508.7
(22) Date de dépôt: 15.01.1997
(51) Int. Cl.: C08K 5/54, C08L 19/00, C08L 53/00, C08K 3/36, C08K 3/04, B60C 1/00

(54) **Composition de caoutchouc à base d'un polymère diénique ayant une fonction silanol et comprenant un dérivé organosilane**
Kautschukmischung, basiert auf einem Dienpolymer mit einer Silanolgruppe, welche ein Organosilanderivat enthält
Rubber composition based on a diene polymer having a silanol group and containing a derivative of an organosilane

(30) Priorité: 26.01.1996 FR 9601040
(43) Date de publication de la demande: 30.07.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Labauze, Gérard, 63100 Clermont-Ferrand (FR)
(74) Mandataire: Dequire, Philippe Jean-Marie Denis

(56) Documents cités:
- EP-A- 0 447 066
- US-A- 4 618 650

## Description

La présente invention est relative à une composition de caoutchouc vulcanisable au soufre utilisable notamment pour la fabrication d'enveloppes de pneumatiques, possédant des propriétés hystérétiques améliorées à l'état vulcanisé, comprenant un polymère diénique fonctionnalisé ou modifié et, à titre de charge renforçante, du noir de carbone ou un mélange de noir de carbone et de silice.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation.
La très grande majorité de ces solutions se sont essentiellement concentrées sur l'utilisation de polymères modifiés avec du noir de carbone comme charge renforçante dans le but d'obtenir une bonne interaction entre le polymère modifié et le noir de carbone car l'usage de charges blanches renforçantes, et de silice notamment, s'est révélé longtemps inapproprié en raison du faible niveau de certaines propriétés des pneumatiques mettant en oeuvre ces compositions. A titre d'exemple illustratif de cet art antérieur nous pouvons citer le brevet US-B-4 550 142 qui décrit une composition de caoutchouc à base de noir de carbone et d'un polymère diénique fonctionnalisé à l'aide d'un dérivé de la benzophénone, ayant des propriétés hystérétiques améliorées.
Le brevet US-B-5 159 009 qui décrit, l'utilisation de noir de carbone modifié par des dérivés alcoxysilanes polysulfurés dans des compositions à base de polymères diéniques. Le brevet US-B-4 820 751 qui décrit une composition de caoutchouc utilisable dans la fabrication de pneumatiques, comprenant un noir de carbone particulier utilisé avec un agent de couplage silane et qui peut être utilisée avec une quantité minoritaire de silice lorsque cette composition est destinée à constituer une bande de roulement. Enfin, la demande de brevet EP-A1-0 519 188 qui décrit une composition destinée à constituer une bande de roulement de pneumatique à base d'un caoutchouc diénique et d'un noir de carbone modifié par incorporation de composés organiques du silicium particuliers au mélange maître.

Quelques solutions ont également été proposées concernant l'utilisation de la silice à titre de charge renforçante dans des compositions destinées à constituer des bandes de roulement de pneumatiques. Ainsi la demande de brevet EP-A-0 299 074 décrit une composition de caoutchouc chargée à la silice, à base d'un polymère diénique fonctionnalisé à l'aide d'un composé silane ayant un reste alcoxyle non hydrolysable. On peut également citer la demande de brevet EP-A-0 447 066 qui décrit une composition chargée à la silice renfermant un polymère diénique fonctionnalisé à l'aide d'un composé silane halogéné. Les compositions de silice décrites dans cet art antérieur ne se sont pas révélées utilisables pour constituer des bandes de roulement de pneumatiques. En effet, malgré l'amélioration des propriétés obtenues avec l'emploi de tels polymères fonctionnalisés, ces dernières restent insuffisantes pour atteindre le niveau requis.

La présente invention a donc pour objet une composition de caoutchouc diénique renfermant à titre de charge renforçante du noir de carbone ou un mélange de noir de carbone et de silice, utilisables dans la fabrication de pneumatiques, notamment de bandes de roulement, possédant des propriétés hystérétiques améliorées.

L'invention a également pour objet des bandes de roulement de pneumatiques et des pneumatiques possédant une résistance réduite au roulement.

La demanderesse vient de découvrir de manière surprenante qu'il est possible, sans affecter les autres propriétés, de diminuer fortement l'hystérèse de compositions caoutchoucs diéniques utilisables dans la fabrication d'enveloppes pneumatiques, notamment de bandes de roulement, comprenant à titre de charge du noir de carbone ou un mélange de noir de carbone et de silice, par l'utilisation d'au moins un polymère diénique fonctionnalisé portant en extrémité de chaîne une fonction silanol ou un bloc polysiloxane ayant une extrémité silanol, ou modifié le long de la chaîne par des fonctions silanols avec au moins un composé organosilane comportant une ou plusieurs fonctions amine ou imine.

L'invention concerne une composition de caoutchouc vulcanisable au soufre comprenant au moins un polymère diénique fonctionnalisé ou modifié, du noir de carbone ou un mélange de noir de carbone et de silice à titre de charge renforçante, caractérisée par le fait que le polymère diénique est un polymère fonctionnalisé portant soit en extrémité de chaîne une fonction silanol ou un bloc polysiloxane ayant une extrémité silanol, ou modifié le long de la chaîne par des fonctions silanols et en ce qu'elle comprend au moins un composé organosilane comportant une ou plusieurs fonctions amine ou imine répondant à la formule générale I :

Z-R¹-Si(OR²)₃₋ₙ(R³)ₙ

dans laquelle:
Z-R¹ représente une fonction amine primaire, secondaire, tertiaire cyclique ou non ou une fonction imine ou un reste polyaminé,
R¹,R² et R³ identiques ou différents, représentent un groupe alcoyle, aryle, alkaryle ou aralkyle ayant de 1 à 12 atomes de carbone et de préférence ayant de 1 à 4 atomes de carbone,
n est un nombre entier choisi parmi les valeurs 0, 1 ou 2.

On pourra avantageusement choisir un groupe méthyle ou éthyle pour représenter R².

A titre d'exemples non limitatifs de composés organosilanes de formule I, on peut mentionner l'aminopropyltriméthoxysilane, l'aminopropyltriéthoxysilane, l'aminopropylméthyldiméthoxysilane, l'aminopropyldiméthylméthoxysilane, le diméthylaminopropyltriméthoxysilane, le méthylaminopropyltriméthoxysilane, l'aminoéthylaminopropyltriméthoxysilane, le pipéridinopropyltriméthoxysilane, le pyrrodilinopropyltriméthoxysilane, le pipérazinopropyltriméthoxysilane, le morpholinopropyltriméthoxysilane, l'imidazolinopropyltriméthoxysilane, le pirazolinopropyltriméthoxysilane, le triazolinopropyltriméthoxysilane, le benzilidènepropylaminotriméthoxysilane. Ces composés organosilanes de formule I peuvent être utilisés dans des quantités variant de 0,1 à 10 parties en poids pour 100 parties de polymères fonctionnalisés.

Tous les polymères fonctionnalisés portant en extrémité de chaîne une fonction silanol ou modifiés le long de la chaîne par des fonctions silanols conviennent mais les polymères diéniques répondant à la formule générale II sont préférés :

P-(SiR'¹R'²O)ₓ-H

dans laquelle :
R'¹ et R'², identiques ou différents, représentent un groupe alcoyle ayant de 1 à 8 atomes de carbone,
x est un nombre entier allant de 1 à 1500 et préférentiellement de 1 à 50,
et P représente la chaîne d'un polymère diénique choisi dans le groupe représenté par tout homopolymère obtenu par polymérisation d'un monomère diène conjugué ayant de 4 à 12 atomes de carbone, et tout copolymère d'un ou plusieurs diènes conjugués entre eux ou avec un ou plusieurs composés vinylaromatiques, ayant de 8 à 20 atomes de carbone.

A titre de diènes conjugués conviennent notamment le 1,3-butadiène, les 2,3-di(alcoyle en C1 à C5)-1,3-butadiènes, un aryle-1,3-butadiène, le 1,3-pentadiène, le 2,4-hexadiène.

A titre de composés vinylaromatiques conviennent notamment le styrène, l'ortho-, méta-, para-méthylstyrène, le mélange commercial "vinyltoluène", le para-tertiobutylstyrène, les méthoxystyrènes, le vinylmésitylène, le divinylbenzène, le vinylnaphtalène.

Les copolymères peuvent contenir entre 99% et 20% en poids d'unités diéniques et de 1% à 80% en poids d'unités vinylaromatiques.

Les polymères diéniques fonctionnalisés portant en extrémité de chaîne une fonction silanol ou un bloc polysiloxane ayant une extrémité silanol, ou modifiés le long de la chaîne par des fonctions silanols peuvent avoir toute microstructure qui est fonction des conditions de polymérisation utilisées. Les polymères peuvent être à blocs, statistiques, séquencés, micro-séquencés et être préparés en masse, en émulsion, en dispersion ou en solution. Lorsqu'il s'agit d'une polymérisation anionique, la microstructure de ces polymères peut être déterminée par la présence ou non d'un agent modifiant et/ou randomisant et les quantités d'agent modifiant et/ou randomisant employées.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 4% et 50% en poids et plus particulièrement entre 20% et 40%, une teneur en liaisons -1,2 de la partie butadiénique comprise entre 4% et 65% , une teneur en liaisons trans-1,4 comprise entre 30% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent ceux ayant une teneur en styrène comprise entre 5% et 50% en poids et plus particulièrement comprise entre 10% et 40%, en isoprène comprise entre 15% et 60% en poids et plus particulièrement entre 20% et 50%, en butadiène comprise entre 5% et 50% en poids et plus particulièrement comprise entre 20% et 40%, en unités -1,2 de la partie butadiénique comprise entre 4% et 85%, en unités trans -1,4 de la partie butadiénique comprise entre 6% et 80%, en unités -1,2 plus 3,4 de la partie isoprénique comprise entre 5% et 70% et en unités trans -1,4 de la partie isoprénique comprise entre 10% et 50%, et plus généralement tout copolymère butadiène-styrène-isoprène ayant une Tg comprise entre -20°C et -70°C.

En tant qu'initiateur de polymérisation, on peut utiliser tout initiateur anionique ou non mono- ou polyfonctionnel connu. Toutefois un initiateur contenant un métal alcalin tel que le lithium ou alcalino-terreux tel que le baryum est utilisé à titre préférentiel.

Comme initiateurs organolithiens conviennent notamment ceux comportant une ou plusieurs liaisons carbone-lithium. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane. Des composés représentatifs contenant du baryum sont ceux décrits par exemple dans les demandes de brevet FR-A-2 302 311 et FR-A-2 273 822 et les certificats d'addition FR-A-2 338 953 et FR-A-2 340 958 dont le contenu est incorporé ici.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

Les polymères diéniques fonctionnalisés ou modifiés mis en oeuvre dans l'invention peuvent être obtenus par analogie par divers procédés. On peut choisir, par exemple, une des quatre voies décrites dans ce qui suit. Une première voie consiste à faire réagir comme décrit dans Journal of Polymer Science, Part A, Vol. 3, p. 93-103 (1965) le polymère diénique vivant avec un agent de fonctionnalisation organosilane , de préférence en sortie de réacteur de polymérisation et à une température identique ou différente et de préférence voisine de la température de polymérisation, pour former un polymère diénique ayant en extrémité de chaîne une fonction halogénosilane et à le soumettre, comme décrit dans le manuel " Chemistry and Technology of Silicones, Academic Press, New York, N.Y. (1968) p. 95, à l'action d'un donneur de protons pour obtenir le polymère diénique fonctionnalisé silanol en extrémité de chaîne. L'enchaînement de ces 2 réactions a déjà été décrit par Messieurs Greber et Balciunas dans Makromol. Chem. 69, p.193-205 (1963). A titre d'exemples d'agents de fonctionnalisation organosilane susceptibles de réagir avec le polymère diénique vivant, on peut citer les dihalogénosilanes linéaires répondant à la formule:

R₁R₂ Si X₂

dans laquelle:
- R₁ et R₂ identiques ou différents, représentent un groupe alcoyle ayant de 1 à 8 atomes de carbone,
- X représente un atome d'halogène et de préférence le chlore ou le brome.
A titre de composés dihalogénosilanes préférentiels, on peut citer les dichlorodiméthylsilane et dichlorodiéthylsilane.

Une seconde voie consiste à faire réagir le polymère vivant avec un agent de fonctionnalisation polysiloxane cyclique pour obtenir un polymère possédant une extrémité SiO- et ce dans un milieu qui ne permet pas la polymérisation du dit cyclopolysiloxane. A titre de polysiloxanes cycliques on peut citer ceux répondant à la formule: 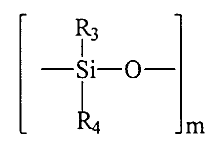 dans laquelle:
- R₃ et R₄ identiques ou différents, représentent un groupe alcoyle ayant de 1 à 8 atomes de carbone,
- m représente un nombre entier de valeur 3 à 8.
et à titre de composés polysiloxanes cycliques préférentiels, on peut citer l'hexaméthylcyclotrisiloxane, le triméthyltriéthylcyclotrisiloxane, l'octaméthylcyclotétrasiloxane, le décaméthylcyclopentasiloxane ainsi que leurs mélanges. Le polymère comportant une extrémité SiO⁻ est ensuite mis à réagir avec un composé donneur de protons pour conduire au polymère diénique fonctionnalisé silanol en extrémité de chaîne.

Une troisième voie consiste à préparer des copolymères à blocs comportant un bloc polysiloxane ayant une extrémité silanol par polymérisation séquencée. Ces copolymères à blocs sont obtenus par la préparation, tel que décrit par exemple dans les brevets US-B-3 483 270 , US-B-3 051 684 et J. Appl. Poly. Sci. Vol. 8, p. 2707-2716 (1964) d'un premier bloc d'un polymère diénique vivant qui est ensuite mis à réagir, en milieu polaire, avec un polysiloxane cyclique qui se polymérise anioniquement en formant un second bloc pour conduire à un copolymère à blocs séquencé comportant un bloc polysiloxane ayant une extrémité (SiO⁻) lequel est ensuite mis à réagir avec un donneur de protons pour conduire au copolymère diénique à blocs comportant un bloc polysiloxane ayant une fonction silanol en extrémité de chaîne.

Une quatrième voie consiste à préparer des copolymères à blocs comportant un bloc polysiloxane ayant une extrémité silanol par greffage de 2 polymères, par exemple, par greffage d'un polysiloxane dilithié ou disodé à un polymère diénique ayant une extrémité (SiX), X représentant un atome d'halogène, le produit de greffage étant ensuite mis à réagir avec un donneur de protons pour conduire au copolymère à blocs comportant un bloc polysiloxane ayant une extrémité silanol comme décrit par exemple par MM.Greber et Balciunas dans Makromol Chem. 79, p. 149-160 (1964) ou cité par MM. Plumb et Atherton dans le manuel " Block Copolymers ", Applied Science, England (1973) p. 339.

Les polymères diéniques fonctionnalisés portant en extrémité de chaîne une fonction silanol ou un bloc polysiloxane ayant une extrémité silanol, ou modifiés le long de la chaîne par des fonctions silanols possèdent une aptitude particulière à être utilisés pour constituer des compositions de caoutchouc comprenant à titre majoritaire de la silice comme charge renforçante. Ce qui explique la surprise pour l'homme de l'art d'améliorer les propriétés hystérétiques de compositions de caoutchouc en utilisant de tels polymères, avec l'ajout de composés organosilanes, lorsque la charge est totalement ou partiellement constituée par du noir de carbone.

Comme noirs de carbone susceptibles d'être mis en oeuvre dans les compositions de caoutchoucs conformes à l'invention, conviennent tous les noirs de carbone qu'ils soient ou non modifiés par oxydation ou par tout autre traitement chimique, notamment tous les noirs de carbone disponibles commercialement ou conventionnellement utilisés dans les pneus et particulièrement dans les bandes de roulement pneumatiques. A titre d'exemples non limitatifs de tels noirs on peut citer les noirs N134, N234, N375, N356, N339.

Le noir de carbone peut représenter la totalité de la charge renforçante, mais il peut également être utilisé en coupage avec une charge blanche et en particulier de la silice. Toutes les silices conviennent, et il peut s'agir soit de silices conventionnelles, soit de silices précitées hautement dispersibles, ces dernières étant toutefois préférées.
Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de telles silices hautement dispersibles préférentielles on peut citer celles ayant une surface CTAB ≤ à 450 m²/g et particulièrement celles décrites dans les demandes de brevet EP-A-0 157 703 et EP-A-0-520 862 ou la silice Perkasil KS 340 de la société Akzo, la silice Zeosil 1165 MP de la Société Rhône-Poulenc, la silice Hi-Sil 2000 de la Société PPG, les silices Zeopol 8741 et Zeopol 8745 de la Société Huber. Plus préférentiellement conviennent les silices ayant une surface spécifique CTAB ≥ à 100 et ≤ à 300 m²/g et une surface spécifique BET ≥ à 100 et ≤ à 300 m²/g et plus préférentiellement celles ayant un rapport surface spécifique BET/surface spécifique CTAB ≥ à 1,0 et ≤ à 1,2, peu important leurs autres caractéristiques additionnelles comme par exemple la prise d'huile, la porosité et la distribution poreuse, le diamètre médian, l'aire projetée moyenne des agrégats et l'état physique sous lequel la silice se présente par exemple microbilles, granulés, poudre. Bien entendu par silice, on entend également des coupages de différentes silices. La silice peut être utilisée seule ou en présence d'autres charges blanches. La surface spécifique CTAB est déterminée selon la méthode NFT 45007 de novembre 1987. La surface spécifique BET est déterminée selon la méthode de BRUNAUER, EMMET, TELLER décrite dans "The Journal of the American Chemical Society, Vol. 80, page 309 (1938) " correspondant à la norme NFT 45007 de novembre 1987.

Le taux de charge peut varier de 30 à 100 parties de polymère fonctionnalisé portant en extrémité de chaîne une fonction silanol ou un bloc polysiloxane ayant une extrémité silanol, ou modifié le long de la chaîne par des fonctions silanols. La proportion de silice dans le coupage peut varier de 1 à 200 parties en poids pour 100 parties de noir de carbone, c'est-à-dire que la silice peut représenter de 1% à 70% en poids de la charge renforçante totale.

Les compositions conformes à l'invention peuvent comprendre un ou plusieurs polymères diéniques fonctionnalisés portant en extrémité de chaîne une fonction silanol ou un bloc polysiloxane ayant une extrémité silanol, ou modifiés le long de la chaîne par des fonctions silanols en tant qu'élastomère utilisés exclusivement ou en coupage avec tout autre polymère diénique conventionnel et notamment avec tout élastomère classiquement utilisé dans les bandes de roulement de pneumatiques. A titre non limitatif de tels élastomères conventionnels, on peut citer le caoutchouc naturel, les polymères diéniques non fonctionnalisés correspondant aux chaînes P de polymères fonctionnalisés ou modifiés répondant à la formule II ou ces mêmes polymères mais couplés ou branchés ou fonctionnalisés mais avec des agents de fonctionnalisation tels que par exemple des dérivés de l'étain ou de la benzophénone tels que décrits par exemple dans les brevets US-B-3 393 182, US-B-3 956 232, US-B-4 026 865, US-B-4 550 142 et US-B-5 001 196.

Lorsque l'élastomère conventionnel utilisé en coupage est du caoutchouc naturel ou un ou plusieurs polymères diéniques non fonctionnalisés comme par exemple les polybutadiènes, les polyisoprènes, les copolymères butadiène-styrène ou butadiène-styrène-isoprène, cet élastomère peut être présent entre 1 à 70 parties en poids pour 100 parties de polymère diénique fonctionnalisé portant en extrémité de chaîne une fonction silanol ou un bloc polysiloxane ayant une extrémité silanol, ou modifié le long de la chaîne par des fonctions silanols. Lorsque l'élastomère conventionnel utilisé en coupage est un polymère fonctionnalisé avec un dérivé de l'étain ou de la benzophénone comme, par exemple, les bisdialkylaminobenzophénones, la thiobenzophénone, les chlorotrialkylétains ou un polymère étoilé par le tétrachlorure d'étain, cet élastomère peut être présent à raison de 1 à 100 parties en poids pour 100 parties en poids de polymère fonctionnalisé portant en extrémité de chaîne une fonction silanol ou un bloc polysiloxane ayant une extrémité silanol, ou modifié le long de la chaîne par des fonctions silanols.

Les compositions conformes à l'invention peuvent évidemment également contenir les autres constituants et additifs habituellement utilisés dans les mélanges de caoutchouc comme des plastifiants, pigments, antioxydants, du soufre, des accélérateurs de vulcanisation, des huiles d'extension, un ou des agents de couplage ou de liaison de silice et/ou un ou des agents de recouvrement de la silice tels que des polyols, amines, alcoxysilanes.

La présente invention a également pour objet un nouveau procédé de préparation de compositions de caoutchoucs diéniques comprenant à titre de charge renforçante du noir de carbone ou un mélange de noir de carbone et de silice, caractérisé en ce qu'on incorpore par un travail thermo-mécanique à un élastomère comprenant au moins un polymère diénique fonctionnalisé portant en extrémité de chaîne une fonction silanol ou un bloc polysiloxane ayant une extrémité silanol, ou modifié le long de la chaîne par des fonctions silanols et au moins un composé organosilane comportant une fonction amine ou imine répondant à la formule générale I.

L'incorporation du composé organosilane de formule I est effectuée dans tout dispositif approprié, par exemple dans un mélangeur interne ou une extrudeuse de manière connue en soi.

Selon une première voie, on soumet l'élastomère ou le coupage comprenant au moins un polymère diénique fonctionnalisé portant en extrémité de chaîne une fonction silanol ou un bloc polysiloxane ayant une extrémité silanol, ou modifié le long de la chaîne par des fonctions silanols à une première phase de travail thermo-mécanique après quoi on ajoute le composé organosilane de formule I à l'élastomère et l'on effectue le mélangeage des 2 constituants dans une seconde phase, puis l'on ajoute le noir de carbone et les autres constituants habituellement utilisés dans les compositions de caoutchoucs destinées à la fabrication de pneumatiques à l'exception du système de vulcanisation et l'on poursuit le travail thermo-mécanique pendant une durée appropriée.

Selon une seconde voie, on soumet l'élastomère comprenant au moins un polymère diénique fonctionnalisé portant en extrémité de chaîne une fonction silanol ou un bloc polysiloxane ayant une extrémité silanol, ou modifié le long de la chaîne par des fonctions silanols et le composé organosilane de formule I à une première phase de travail thermo-mécanique puis l'on ajoute le noir de carbone et les autres constituants habituellement utilisés dans les compositions de caoutchoucs destinées à la fabrication de pneumatiques à l'exception du système de vulcanisation et l'on poursuit le travail thermo-mécanique pendant une durée appropriée.

Selon une troisième voie, on soumet l'élastomère comprenant au moins un polymère diénique fonctionnalisé portant en extrémité de chaîne une fonction silanol ou un bloc polysiloxane ayant une extrémité silanol, ou modifié le long de la chaîne par des fonctions silanols le composé organosilane de formule I et le noir de carbone à une première phase de travail thermo-mécanique puis l'on ajoute les autres constituants habituellement utilisés dans les compositions de caoutchoucs destinées à la fabrication de pneumatiques à l'exception du système de vulcanisation et l'on poursuit le travail thermo-mécanique pendant une durée appropriée.

Dans le cas où c'est à la fois du noir de carbone et de la silice qui sont utilisés comme charge renforçante, on procède à un travail thermo-mécanique successivement de l'élastomère fonctionnalisé portant en extrémité de chaîne une fonction silanol ou un bloc polysiloxane ayant une extrémité silanol, ou modifié le long de la chaîne par des fonctions silanols, du composé organosilane de formule I, de la silice, de l'agent de liaison, après quoi l'on incorpore le noir de carbone. Le travail thermo-mécanique est dans ce cas préférentiellement effectué en 2 étapes thermiques séparées par une étape de refroidissement à une température inférieure à 100°C comme décrit dans la demande de brevet EP-A-0 501 227.

Au mélange obtenu selon l'un quelconque des modes d'exécution, on ajoute enfin le système de vulcanisation comme connu en soi dans une étape de finition avant de procéder à la vulcanisation de la composition.

L'invention est illustrée à titre non limitatif par les exemples qui suivent, dans lesquels les propriétés des composition sont évaluées comme suit :
- Viscosité Mooney : ML (1+4) à 100°C mesurée selon la norme ASTM:D-1646.
- Dureté Shore A: mesures effectuées selon la norme DIN 53505.
- Modules d'allongement à 300% (MA300), 100% (MA100) et 10% (MA10): mesures effectuées selon la norme ISO 37.
- Indices de cassage Scott : mesurés à 20°C
   Forces à la rupture (FR) en MPa
   Allongement à la rupture (AR) en %.
- Pertes hystérétiques (PH) mesurées par rebond à 60°C en %.
- Propriétés dynamiques de cisaillement :
   Mesures en fonction de la déformation : effectuées à 10 Hertz avec une déformation crête-crête allant de 0,15% à 50%. La non linéarité ΔG exprimée en MPA est la différence de module de cisaillement entre 0,15% et 50% de déformation. L'hystérèse est exprimée par la mesure de tgδ à 7% de déformation et à 23°C selon la norme ASTM D2231-71 (réapprouvée en 1977).

### Exemple 1 (en dehors de l'invention)

Cet exemple de contrôle a pour but de comparer les propriétés d'une composition à base d'un polymère fonctionnalisé portant en extrémité de chaîne une fonction silanol à 2 compositions à base des mêmes polymères mais l'un non fonctionnalisé et l'autre fonctionnalisé avec un agent de fonctionnalisation connu dans l'état de la technique comme procurant des propriétés hystérétiques intéressantes dans le cadre de compositions renforcées au noir de carbone.

Dans tous les essais de cet exemple, le polymère diénique est un copolymère butadiène-styrène ayant une teneur en liaison vinylique polybutadiène de 41% en poids, une teneur en liaison styrénique de 25% en poids, et dont la viscosité de Mooney est de 30.

Les copolymères butadiène-styrènes mis en oeuvre dans les trois compositions sont :
- pour l'essai A, un copolymère portant une fonction silanol terminale, fonctionnalisé à cet effet à l'aide d'un agent de fonctionnalisation siloxane cyclique (SBR-A),
- pour l'essai B, un copolymère fonctionnalisé (SBR-B) avec le n-Bu₃SnCl comme décrit dans les brevets US-B-3 956 232 et 4 026 865.
- pour l'essai C, un copolymère non fonctionnalisé et stoppé au méthanol (SBR-C).

Pour tous les essais, le copolymère est préparé dans un réacteur de 32 litres de capacité utile avec agitateur du type turbine, dans lequel on introduit en continu du toluène, du butadiène, du styrène et du THF dans un rapport massique 100 : 10 : 4,3 : 0,3 et une solution de 1030 micromoles de n-BuLi actif pour cent grammes de monomères. Les débits des différentes solutions sont calculés pour avoir un temps moyen de séjour de 45 minutes sous forte agitation. La température est maintenue constante à 60°C. En sortie de réacteur la conversion mesurée est de 88 %. Le copolymère est ensuite soit stoppé au méthanol comme dans le cas de SBR-C, soit fonctionnalisé au cours d'une étape ultérieure.

Le copolymère utilisé dans l'essai A est fonctionnalisé comme décrit ci-après.
On ajoute en sortie de réacteur, à l'entrée d'un mélangeur statique, de l'hexaméthylcyclotrisiloxane (D₃) dans un rapport D₃ / n-BuLi actif = 0,48. La réaction de fonctionnalisation est effectuée à 60°C.

Trois minutes après l'addition de l'agent de fonctionnalisation, on ajoute 0,5 partie pour cent parties d'élastomère de 4,4'-méthylène-bis-2,6-ditertiobutyl phénol en tant qu'agent antioxydant. Le copolymère fonctionnalisé est récupéré par l'opération classique de stripping à la vapeur d'eau du solvant puis séché à l'étuve à 50°C.

A l'aide des 3 copolymères SBR-A, B et C, on prépare comme connu en soi, 3 compositions de caoutchouc respectivement A1, B1 et C1 renforcées exclusivement par du noir de carbone selon la formulation suivante où toutes les parties sont exprimées en poids :

| | |
|---|---|
| Elastomère | 100 |
| Noir N 234 | 50 |
| Huile aromatique | 5 |
| Oxyde de zinc | 2,5 |
| Acide stéarique | 1,5 |
| Antioxydant (a) | 1,9 |
| Paraffine (b) | 1,5 |
| Soufre | 1,4 |
| Sulfénamide (c) | 1,4 |
| (a) : antioxydant : N-(1,3-diméthyl-butyl)-N'-phényl-p-phénylènediamine | |
| (b) : paraffine : mélange de cires macro et microcristallines | |
| (c) : Sulfénamide : N-cyclohexyl-2-benzothiazyl sulfénamide | |

Les compositions sont réalisées en une seule étape pour aboutir à un mélange dans un mélangeur interne rempli à 70 %, dont la température de la cuve est de 60°C et la vitesse moyenne des palettes de 45 tours par minute.

On introduit l'élastomère dans la cuve puis après un temps approprié de malaxage tous les autres constituants de la formulation à l'exception du système de vulcanisation sont ajoutés et l'on poursuit le travail thermo-mécanique de malaxage jusqu'à la température de tombée de 180°C. On récupère le mélange puis l'on ajoute le soufre et la sulfénamide constituant le système de vulcanisation sur homo-finisseur à 30°C.

La vulcanisation est effectuée à 150°C pendant 40 minutes. On compare entre elles les propriétés des 3 compositions tant à l'état vulcanisé qu'à l'état non vulcanisé.

Les résultats sont consignés dans le tableau I:

**TABLEAU I**

| Compositions | A1 | B1 | C1 |
|---|---|---|---|
| Propriétés à l'état non vulcanisé | | | |
| Mooney | 70 | 90 | 65 |

| Propriétés à l'état vulcanisé | | | |
|---|---|---|---|
| Dureté Shore | 67,8 | 64,9 | 67,7 |
| MA10 | 5,90 | 4,83 | 5,86 |
| MA100 | 2,22 | 1,95 | 2,18 |
| MA300 | 2,92 | 2,88 | 2,86 |
| MA300/MA100 | 1,32 | 1,48 | 1,31 |

| Indices de cassage Scott | | | |
|---|---|---|---|
| 20°C FR | 23 | 25 | 23 |
| 20°C AR% | 470 | 440 | 480 |
| Pertes 60°C* | 35 | 28 | 36 |

| Propriétés dynamiques en fonction de la déformation | | | |
|---|---|---|---|
| ΔG à 23°C | 2,46 | 0,90 | 2,56 |
| tgδ à 23°C | 0,25 | 0,20 | 0,26 |

| | | | |
|---|---|---|---|
| (*) la déformation pour cette mesure de perte hystérétiques est de 35%. | | | |

Au vu des propriétés à l'état non vulcanisé et à l'état vulcanisé, la composition A1 comportant le SBR-A portant en bout de chaîne une fonction silanol ne donne pas des propriétés significativement améliorées par rapport à la composition C1 mettant en oeuvre le SBR-C stoppé au méthanol. Seul le SBR-B fonctionnalisé avec le n-Bu₃SnCl permet d'obtenir une composition B1 avec des propriétés d'hystérèse nettement réduites à faible et forte déformation.

### Exemple 2

Cet exemple a pour but de mettre en évidence l'amélioration des propriétés des compositions conformes à l'invention.

On réalise avec les 3 copolymères SBR-A, SBR-B et SBR-C, utilisés dans l'exemple 1, 3 compositions respectivement A2, B2 et C2 qui différent des précédentes uniquement par l'addition à l'élastomère d'un agent organosilane répondant à la formule générale I et qui en l'espèce est l'aminopropyltriméthoxysilane (APTSI) de formule :

H₂N-(CH₂)₃-Si(OCH₃)₃.

Les compositions sont préparées selon la 1ère voie décrite auparavant. L'addition d'une partie en poids de l'organosilane pour 100 parties en poids d'élastomère est effectuée 20 secondes après le début de l'opération thermo-mécanique de malaxage.

Les propriétés des compositions obtenues sont consignées dans le tableau II.

**TABLEAU II**

| Compositions | A2 | B2 ⁺ | C2 ⁺ |
|---|---|---|---|
| Propriétés à l'état non vulcanisé | | | |
| Mooney | 90 | 90 | 70 |

| Propriétés à l'état vulcanisé | | | |
|---|---|---|---|
| Dureté Shore | 64,5 | 64,0 | 66,0 |
| MA10 | 4,95 | 4,85 | 5,75 |
| MA100 | 2,03 | 2,04 | 2,10 |
| MA300 | 2,80 | 2,93 | 2,80 |
| MA300/MA100 | 1,38 | 1,44 | 1,33 |

| Indices de cassage Scott | | | |
|---|---|---|---|
| 20°C FR | 25 | 25 | 24 |
| 20°C AR% | 410 | 430 | 440 |
| Pertes 60°C* | 29 | 28 | 35 |

| Propriétés dynamiques en fonction de la déformation | | | |
|---|---|---|---|
| ΔG à 23°C | 1,00 | 0,84 | 2,46 |
| tgδ à 23°C | 0,20 | 0,19 | 0,25 |

| | | | |
|---|---|---|---|
| (*) la déformation pour cette mesure de perte hystérétiques est de 35 %. | | | |
| (⁺) en dehors de l'invention | | | |

Au vu des propriétés à l'état vulcanisé, on constate que l'addition au mélangeur interne d'aminopropyltriméthoxysilane confère à la composition A2 comportant le SBR-A portant en extrémité de chaîne une fonction silanol, des propriétés de renforcement et d'hystérèse améliorées par rapport à la composition C2 mettant en oeuvre le SBR-C stoppé au méthanol et du même niveau que celles obtenues avec la composition B2 mettant en oeuvre le SBR-B fonctionnalisé avec le n-Bu₃SnCl.

On constate également que si l'addition de l'aminopropyltriméthoxysilane améliore fortement les propriétés de la composition A2 mettant en oeuvre le SBR-A, elle n'a pas pratiquement aucun effet sur les compositions mettant en oeuvre SBR-B ou SBR-C dans ce type de mélange à base de noir de carbone.

### Exemple 3

Cet exemple montre à travers 4 essais relatifs à des compositions conformes à l'invention mettant en oeuvre le SBR-A avec 4 agents organosilanes différents répondant à la formule générale I, qu'ils procurent effectivement tous des compositions aux propriétés améliorées.

Les agents modifiants choisis sont donc :
- pour l'essai 1, l'aminopropyltriméthoxysilane (APTSI) de formule H₂N-(CH₂)₃-Si(OCH₃)₃,
- pour l'essai 2, le méthylaminopropyltriméthoxysilane (MAPTSI) de formule CH₃-HN-(CH₂)₃-Si(OCH₃)₃,
- pour l'essai 3, le diméthylaminopropyltriméthoxysilane (DMAPTSI) de formule : (CH₃)₂-N-(CH₂)₃-Si(OCH₃)₃,
- pour l'essai 4, l'imidazolinepropyltriméthoxysilane (IMPTSI) de formule :

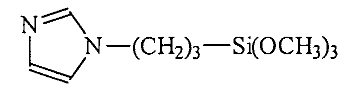

Les propriétés des 4 compositions sont consignées dans le tableau III.

**TABLEAU III**

| Essais | 1 | 2 | 3 | 4 |
|---|---|---|---|---|
| Agent | APTSI | MAPTSI | DMAPTSI | IMPTSI |
| Propriétés à l'état non vulcanisé | | | | |
| Mooney | 90 | 90 | 88 | 92 |

| Propriétés à l'état vulcanisé | | | | |
|---|---|---|---|---|
| Dureté Shore | 64,5 | 65,0 | 64,8 | 64,6 |
| MA10 | 4,95 | 4,95 | 4,98 | 5,01 |
| MA100 | 2,03 | 2,03 | 2,05 | 2,10 |
| MA300 | 2,80 | 2,86 | 2,91 | 2,94 |
| MA300/MA100 | 1,38 | 1,41 | 1,42 | 1,40 |
| Pertes à 60°C* | 29 | 28,6 | 29,3 | 28,8 |

| Propriétés dynamiques en fonction de la déformation | | | | |
|---|---|---|---|---|
| ΔG à 23°C | 1,00 | 0,94 | 1,00 | 0,90 |
| tgδ à 23°C | 0,20 | 0,19 | 0,20 | 0,19 |

| | | | | |
|---|---|---|---|---|
| (*) la déformation pour cette mesure de perte hystérétiques est de 35%. | | | | |

Les résultats montrent que les divers agents organosilanes confèrent aux compositions des propriétés d'hystérèse améliorées par rapport à celles exhibées par la composition mettant en oeuvre le SBR-A dans l'exemple 1 et de même niveau que celles exhibées par la composition B1 mettant en oeuvre le SBR-B dans l'exemple 1.
Les propriétés de renforcement des 4 compositions conformes à l'invention, sont également améliorées.

### Exemple 4

Cet exemple a pour but de montrer que l'amélioration des propriétés est également obtenue lorsque la charge renforçante n'est pas exclusivement constituée par du noir de carbone mais est constituée par un coupage de noir de carbone et de silice. On prépare avec les 3 polymères utilisés dans l'exemple 1, 3 compositions A4, B4, et C4 dont la formulation est la suivante :

| | |
|---|---|
| Elastomère | 100 |
| APTSI | 1 |
| Silice* | 30 |
| Noir N 234 | 30 |
| Huile aromatique | 20 |
| Agent de liaison** | 2,4 |
| Oxyde de zinc | 2,5 |
| Acide stéarique | 1,5 |
| Antioxydant (a) | 1,9 |
| Paraffine (b) | 1,5 |
| Soufre | 1,1 |
| Sulfénamide (c) | 2 |
| Diphénylguanidine | 1,5 |

| | |
|---|---|
| (*) la silice est une silice hautement dispersible, sous forme de microperles, commercialisée par le Société Rhône Poulenc sous la dénomination Zeosil 1165 MP. | |
| (**) l'agent de liaison est un organosilane polysulfuré commercialisé par la Société Degussa sous la dénomination SI69. (a) : antioxydant : N-(1,3-diméthyl-butyl)-N'-phényl-p-phénylènediamine (b) : paraffine : mélange de cires macro et microcristallines (c) : Sulfénamide : N-cyclohexyl-2-benzothiazyl sulfénamide | |

L'obtention des compositions A4, B4 et C4 mettant en oeuvre respectivement les copolymères SBR-A, SBR-B et SBR-C, est effectuée, selon une forme d'exécution préférentielle, en deux étapes thermo-mécaniques séparées par une phase de refroidissement. La première étape est effectuée dans un mélangeur interne avec les mêmes conditions de coefficient de remplissage, de température et de vitesse des palettes que celles indiquées dans l'exemple 1. L'organosilane, en l'occurrence l'APTSI, est comme dans l'exemple précédent rajouté à l'élastomère 20 secondes après le début du malaxage de l'élastomère puis, une minute après l'addition de l'APTSI, la silice, l'agent de liaison et l'huile sont rajoutés, ensuite, une minute plus tard, le noir de carbone suivi de l'acide stéarique et la paraffine. Le travail thermo-mécanique est poursuivi jusqu'à atteindre une température de tombée voisine de 160°C puis le bloc élastomérique est récupéré et refroidi.

La seconde étape est toujours effectuée dans le même mélangeur interne avec des conditions de température et de vitesse de palettes inchangées. Le bloc élastomérique est soumis à un travail thermo-mécanique pendant une durée appropriée pour amener la température à environ 100°C, on ajoute alors l'oxyde de zinc et l'antioxydant, après quoi on poursuit le travail thermo-mécanique jusqu'à une température de tombée voisine de 160°C et on récupère le mélange.

A ce mélange sont incorporés comme connu en soi les 3 composants constituant le système de vulcanisation au cours d'une étape de finition.

La vulcanisation est effectuée comme dans les autres exemples pendant 40 minutes à 150°C.
Les propriétés des 3 compositions A4, B4 et C4 ainsi obtenues sont consignées dans le tableau IV et comparées à 3 compositions témoins A4-T, B4-T et C4-T mettant en oeuvre les mêmes copolymères mais dépourvues d'APTSI.

**TABLEAU IV**

| Compositions | A4 | B4 ⁺ | C4 ⁺ | A4-T ⁺ | B4-T ⁺ | C4-T ⁺ |
|---|---|---|---|---|---|---|
| Propriétés à l'état non vulcanisé | | | | | | |
| Mooney | 103 | 98 | 80 | 101 | 95 | 78 |

| Propriétés à l'état vulcanisé | | | | | | |
|---|---|---|---|---|---|---|
| Dureté Shore | 59,4 | 60,5 | 60,6 | 60,0 | 61,7 | 60,9 |
| MA10 | 3,87 | 4,18 | 4,24 | 4,14 | 4,62 | 4,29 |
| MA100 | 1,67 | 1,68 | 1,72 | 1,76 | 1,77 | 1,74 |
| MA300 | 2,51 | 2,32 | 2,25 | 2,47 | 2,36 | 2,27 |
| MA300/MA100 | 1,50 | 1,38 | 1,31 | 1,40 | 1,33 | 1,30 |

| Indices de cassage Scott | | | | | | |
|---|---|---|---|---|---|---|
| 20°C FR | 23 | 21 | 21 | 22 | 22 | 21 |
| 20°C AR% | 510 | 520 | 560 | 550 | 590 | 610 |
| Pertes 60°C* | 22 | 26 | 29 | 25 | 27 | 29 |

| Propriétés dynamiques en fonction de la déformation | | | | | | |
|---|---|---|---|---|---|---|
| ΔG à 23°C | 1,66 | 2,53 | 2,89 | 2,16 | 2,93 | 3,00 |
| tgδ à 23°C | 0,23 | 0,27 | 0,29 | 0,26 | 0,28 | 0,30 |

| | | | | | | |
|---|---|---|---|---|---|---|
| (*) la déformation pour cette mesure de perte hystérétiques est de 42%. | | | | | | |
| (⁺) en dehors de l'invention | | | | | | |

Au vu des propriétés à l'état vulcanisé, on constate que l'addition au mélangeur interne d'APTSI confère à la composition A4 mettant en oeuvre le SBR-A fonctionnalisé silanol des propriétés d'hystérèse améliorées non seulement par rapport à celles de la composition mettant C4 en ouvre le SBR-C stoppé au méthanol mais même par rapport à celles de la composition B4 mettant en oeuvre le SBR-B fonctionnalisé par du n-Bu₃SnCl.

Ainsi l'addition d'agent organosilane répondant à la formule I, à un polymère fonctionnalisé silanol procure une amélioration des propriétés hystérétiques même lorsque le noir de carbone n'est pas la charge unique.

En raison de leurs propriétés hystérétiques améliorées, les compositions conformes à l'invention lorsqu'elles sont mises en oeuvre dans un pneumatique sous forme de produits semi-finis, notamment sous forme de bandes de roulement, permettent l'obtention de pneumatiques ayant une résistance au roulement améliorée et par voie de conséquence permettent de réduire la consommation de carburant.

## Revendications

1. Composition de caoutchouc vulcanisable au soufre comprenant au moins un polymère diénique fonctionnalisé ou modifié et, à titre de charge renforçante, du noir de carbone ou un mélange de noir de carbone et de silice, caractérisée par le fait que le polymère diénique est un polymère fonctionnalisé portant en extrémité de chaîne une fonction silanol ou un bloc polysiloxane ayant une extrémité silanol, ou modifié le long de la chaîne par des fonctions silanols et que la composition comprend en outre au moins un composé organosilane comportant une fonction amine ou imine répondant à la formule générale I:
Z-R¹-Si(OR²)₃₋ₙ(R³)ₙ
dans laquelle:
Z-R¹ représente une fonction amine primaire, secondaire, tertiaire cyclique ou non, ou une fonction imine ou un reste polyaminé,
R¹, R² et R³, identiques ou différents, représentent un groupe alcoyle, aryle, alkaryle ou aralkyle ayant de 1 à 12 atomes de carbone et de préférence ayant de 1 à 4 atomes de carbone,
n est un nombre entier choisi parmi les valeurs 0, 1 ou 2.

2. Composition selon la revendication 1, caractérisée par le fait que R² représente un groupe méthyle ou éthyle.

3. Composition selon l'une quelconque des revendications 1 ou 2, caractérisée par le fait que le polymère diénique fonctionnalisé ou modifié répond à la formule générale II :
P-(SiR'¹R'²O)ₓ-H
dans laquelle :
R'¹ et R'², identiques ou différents, représentent un groupe alcoyle ayant de 1 à 8 atomes de carbone,
x est un nombre entier allant de 1 à 1500,
P représente la chaîne d'un polymère diénique choisi dans le groupe représenté par tout homopolymère obtenu par polymérisation d'un monomère diène conjugué ayant de 4 à 12 atomes de carbone, et tout copolymère d'un ou plusieurs diènes conjugués entre eux ou avec un ou plusieurs composés vinylaromatiques, ayant de 8 à 20 atomes de carbone.

4. Composition selon l'une quelconque des revendications 1 à 3, caractérisée par le fait qu'elle comprend en outre du caoutchouc naturel et/ou du polybutadiène et/ou du polyisoprène et/ou un copolymère de butadiène-styrène et/ou un copolymère de butadiène-styrène-isoprène.

5. Composition selon l'une quelconque des revendications 1 à 3, caractérisée par le fait qu'elle comprend en outre un ou plusieurs polymères fonctionnalisés par les bisdialkylaminobenzophénones, la thiobenzophénone ou les chlorotrialkylétains, ou étoilés par le tétrachlorure d'étain.

6. Composition selon l'une quelconque des revendications 1 à 5, caractérisée par le fait que le noir de carbone représente la totalité de la charge renforçante.

7. Composition selon l'une quelconque de revendications 1 à 5, caractérisée par le fait que la charge renforçante est constituée par un mélange de noir de carbone et de silice, cette dernière pouvant représenter jusqu'à 70% en poids de la charge totale.

8. Composition selon la revendication 7, caractérisée par le fait que la silice est une silice hautement dispersible ayant une surface CTAB ≤ à 450m²/g.

9. Composition selon la revendication 8, caractérisée par le fait que la silice possède une surface spécifique BET ≥ à 100 et ≤ à 300m²/g et un rapport surface spécifique BET sur surface spécifique CTBA ≥ à 1 et ≤ à 1,2.

10. Procédé de préparation d'une composition de caoutchouc vulcanisable au soufre selon la revendication 1, ladite composition possédant des propriétés hystérétiques améliorées et comprenant des additifs usuels qui sont utilisés dans des compositions de caoutchoucs diéniques vulcanisables au soufre, caractérisé en ce qu'on incorpore par travail thermo-mécanique, avant addition et incorporation desdits additifs usuels, au moins un composé organosilane selon la revendication 1 à un élastomère comprenant au moins un polymère diénique selon la revendication 1, la charge renforçante que comprend ladite composition étant ajoutée soit après ledit travail thermo-mécanique si la charge renforçante est du noir de carbone ou un mélange de noir de carbone et de silice, soit avant ledit travail thermo mécanique si la charge renforçante est du noir de carbone.

11. Procédé selon la revendication 10, caractérisé en ce que le composé organosilane est mis en présence de l'élastomère diénique fonctionnalisé ou modifié avant tout travail thermo-mécanique et qu'on procède ensuite à l'incorporation du composé organosilane de formule I à l'élastomère par travail thermo-mécanique, ladite charge renforçante étant ajoutée après l'incorporation dudit composé organosilane.

12. Procédé selon la revendication 10, caractérisé en ce qu'on ajoute le composé organosilane à l'élastomère diénique fonctionnalisé ou modifié après une phase initiale de travail thermo-mécanique de l'élastomère diénique fonctionnalisé ou modifié et en ce qu'on incorpore le composé organosilane de formule I à l'élastomère diénique fonctionnalisé ou modifié par travail thermo-mécanique, ladite charge renforçante étant ajoutée après l'incorporation dudit composé organosilane.

13. Procédé selon la revendication 10, ladite composition comprenant du noir de carbone à titre de charge renforçante, caractérisé en ce que l'on soumet l'élastomère diénique fonctionnalisé ou modifié, le composé organosilane de formule I et ledit noir de carbone à une première phase de travail thermo-mécanique, puis en ce que l'on ajoute lesdits additifs usuels à l'exception du système de vulcanisation et que l'on poursuit le travail thermo-mécanique pendant une durée appropriée.

14. Procédé selon la revendication 12, ladite composition comprenant du noir de carbone et de la silice à titre de charge renforçante, caractérisé en ce que l'on ajoute successivement à l'élastomère diénique fonctionnalisé ou modifié ayant subi une phase initiale de travail thermo-mécanique, dans l'ordre suivant le composé organosilane de formule I puis la silice et l'agent de liaison, puis l'huile et enfin le noir de carbone avec l'acide stéarique et l'agent anti-oxydant, on récupère ensuite le bloc élastomérique formé qui est refroidi, que dans une seconde étape thermo-mécanique on ajoute au bloc élastomérique de la première étape lesdits additifs usuels à l'exception du système de vulcanisation, en ce qu'on les incorpore par travail thermo-mécanique, qu'on récupère le mélange et que dans une étape de finition on incorpore le système de vulcanisation et récupère la composition vulcanisable.

15. Pneumatique possédant une résistance au roulement améliorée, qui comprend une composition de caoutchouc vulcanisable au soufre comprenant au moins un polymère diénique fonctionnalisé ou modifié et, à titre de charge renforçante, du noir de carbone ou un mélange de noir de carbone et de silice, caractérisée par le fait que le polymère diénique est tel que défini à la revendication 1 et que ladite composition comprend en outre au moins un composé organosilane tel que défini à la revendication 1.

16. Pneumatique selon la revendication 15, caractérisé par le fait que la composition entre dans la constitution de la bande de roulement.

17. Bande de roulement de pneumatique qui comprend une composition de caoutchouc vulcanisable comprenant au moins un polymère diénique fonctionnalisé ou modifié et, à titre de charge renforçante, du noir de carbone ou un mélange de noir de carbone et de silice, caractérisée par le fait que le polymère diénique est tel que défini à la revendication 1 et que ladite composition comprend en outre au moins un composé organosilane tel que défini à la revendication 1.

## Patentansprüche

1. Mit Schwefel vulkanisierbare Gummizusammensetzung mit mindestens einem Dienpolymer, das mit Ruß oder einer Mischung aus Ruß und Silizium als verstärkender Zuschlag funktionalisiert oder modifiziert ist, dadurch gekennzeichnet, daß das Dienpolymer ein funktionalisisertes Polymer ist, das entweder am Ende der Kette eine Silanolgruppe oder einen Polysiloxanblock trägt, der ein Silanolende hat, oder längs der Kette durch Silanolgruppen modifiziert ist, und daß sie mindestens eine Organosilanzusammensetzung aufweist, die eine oder mehrere Amin- oder Imingruppen aufweist, die der allgemeinen Formel I entsprechen:
Z - R¹ - Si(OR²) ₃₋ₙ (R³) ₙ
worin:
Z - R¹ primäre, sekundäre, tertiäre, zyklische oder nicht-zyklische Amingruppe oder eine Imingruppe oder einen polyaminierten Rest darstellt,
R¹, R² und R³, die identisch oder verschieden sind, eine Alkyl-, Aryl-, Alkaryl- oder Aralkyl-Gruppe darstellen, die 1 bis 12 Kohlenstoffatome hat, bevorzugt 1 bis 4 Kohlenstioffatome, und
n eine ganze Zahl ist, die unter den Werten 1, 1 oder 2 ausgewählt ist.

2. Zusammensetzung nach Anspruch 1, dadurch gekennzeichnet, daß R² eine Methyl- oder Ethylgruppe darstellt.

3. Zusammensetzung nach irgendeinem der Ansprüche 1 oder 2, dadurch gekennzeichnet, daß das funktionalisierte oder modifizierte Dienpolymer der allgemeinen Formel II entspricht:
P - (SiR'¹ R'² O)ₓ - H
worin:
R'¹ und R'², die identisch oder unterschiedlich sind, eine Alkylgruppe darstellen, die 1 bis 8 Kohlenstoffatome hat,
x eine ganze Zahl ist, die von 1 bis 1500 reicht, und
P die Kette eines Dienpolymers darstellt, das in der Gruppe ausgewählt ist, die durch jedes Homopolymer dargestellt wird, das durch Polymerisierung eines konjugierten Dienmonomers erhalten wird, das 4 bis 12 Kohlenstoffatome hat, und durch jedes Copolymer eines oder mehrerer Diene, die miteinander oder mit einem oder mehreren vinylaromatischen Zusammensetzungen konjugiert sind, mit 8 bis 20 Kohlenstoffatomen.

4. Zusammensetzung nach irgendeinem der Ansprüche 1 bis 3, dadurch gekennzeichnet, daß sie außerdem Nautrgummi und/oder Polybutadien und/oder Polyisopren und/oder ein Butadien-Styrol-Copolymer und/oder ein Butadien-Styrol-Isopren-Copolymer aufweist.

5. Zusammensetzung nach irgendeinem der Ansprüche 1 bis 3, dadurch gekennzeichnet, daß sie außerdem ein oder mehrere Polymere aufweist, die die durch Bisdialkylaminobenzophenone, Thiobenzophenon oder die Chlorotrialkyletane funktionalisiert wurden oder durch Zinntetrachlorid sternartig aufgespalten wurden.

6. Zusammensetzung nach irgendeinem der Ansprüche 1 bis 5, dadurch gekennzeichnet, daß der Ruß die Gesamtheit des verstärkenden Zuschlags darstellt.

7. Zusammensetzung nach irgendeinem der Ansprüche 1 bis 5, dadurch gekennzeichnet, daß der Verstärkungszuschlag von einer Mischung aus Ruß und Silicium gebildet ist, welches bis zu 70 Gew.-% des Gesamtzuschlags darstellen kann.

8. Zusammensetzung nach Anspruch 7, dadurch gekennzeichnet, daß das Silicium ein hoch dispersibles Silicium ist und eine Oberfläche CTAB ≤450 m²/g hat.

9. Zusammensetzung nach Anspruch 8, dadurch gekennzeichnet, daß das Silicium eine spezifische Oberfläche BET ≥ 100 und ≤ 300 m²/g und ein Verhältnis der spezifischen Oberfläche BET zur spezifischen Oberfläche CTBA ≥1 und ≤ 1,2 besitzt.

10. Verfahren zur Herstellung einer mit Schwefel vulkanisierbaren Gummizusammensetzung nach Anspruch 1, wobei die genannte Zusammensetzung verbesserte Hystereseeigenschaften besitzt und übliche Zusätze aufweist, die in schwefel-vulkanisierbaren Dien-Gummizusammensetzungen verwendet werden, dadurch gekennzeichnet, daß man durch thermo-mechanische Bearbeitung vor dem Zusatz und der Einarbeitung der genannten, üblichen Zusätze mindestens eine Organosilan-Zusammensetzung nach Anspruch 1 in ein Elastomer einarbeitet, das mindestens ein Dienpolymer nach Anspruch 1 aufweist, wobei der verstärkende Zuschlag, der die genannte Zusammensetzung enthält, entweder nach der genannten thermo-mechanischen Bearbeitung hinzugefügt wird, wenn der verstärkende Zuschlag Ruß oder eine Mischung aus Ruß und Silizium ist, oder vor der genannten thermo-mechanischen Bearbeitung, wenn der verstärkende Zuschlag Ruß ist.

11. Verfahren nach Anspruch 10, dadurch gekennzeichnet, daß die Organosilan-Zusammensetzung in Anwesenheit des funktionalisierten oder modifizierten Dienelastomers vor jeglicher thermo-mechanischen Bearbeitung zugesetzt wird, und daß man dann mit der Einarbeitung der Organosilan-Zusammensetzung der Formel I in das Elastomer durch thermo-mechanische Bearbeitung fortfährt, wobei der genannte, verstärkende Zuschlag nach der Einarbeitung der genannten Organosilan-Zusammensetzung hinzugefügt wird.

12. Verfahren nach Anspruch 10, dadurch gekennzeichnet, daß man die Organosilan-Zusammensetzung zum funktionalisierten oder modifizierten Dienelastomer nach einer Anfangsphase der thermo-mechanischen Bearbeitung des funktionalisierten oder modifizierten Dienelastomers hinzufügt, und daß man die Organosilan-Zusammensetzung der Formel I in das funktionalisierte oder modifizierte Dienelastomer durch thermo-mechanische Bearbeitung einarbeitet, wobei der genannte, verstärkende Zuschlag nach der Einarbeitung der genannten Organosilan-Zusammensetzung hinzugefügt wird.

13. Verfahren nach Anspruch 10, wobei die genannte Zusammensetzung Ruß als verstärkenden Zuschlag aufweist, dadurch gekennzeichnet, daß man das funktionalisierte oder modifizierte Dienelastomer, die Organosilan-Zusammensetzung der Formel I und den genannten Ruß einer ersten thermo-mechanischen Bearbeitungsphase unterzieht, daß man dann die genannten, üblichen Zusätze mit Ausnahme des Vulkanisationssystems hinzufügt, und daß man die thermo-mechanische Bearbeitung während einer angemessenen Dauer fortsetzt.

14. Verfahren nach Anspruch 12, wobei die genannte Zusammensetzung Ruß und Silizium als verstärkenden Zuschlag aufweist, dadurch gekennzeichnet, daß man aufeinanderfolgend dem funktionalisierten oder modifizierten Dienelastomer, das man einer Anfangsphase thermo-mechanischer Arbeit unterzogen hat, in der folgenden Reihenfolge die Organosilan-Zusammensetzung der Formel I, dann das Öl und schließlich den Ruß mit der Stearinsäure und dem antioxidierenden Mittel hinzufügt, dann daraus den geformten Elastomerblock gewinnt, der gekühlt wird, daß man in einem zweiten, thermo-mechanischen Schritt zum Elstomerblock des ersten Schritts die genannten, üblichen Zusätze hinzufügt, mit Ausnahme des Vulkanisationssystemes, und daß man sie durch thermo-mechanische Bearbeitung einarbeitet, daß man die Mischung daraus gewinnt und daß man in einem abschließenden Schritt das Vulkanisationssystem hinzufügt und die vulkanisierbare Zusammensetzung daraus gewinnt.

15. Reifen, der einen verbesserten Rollwiderstand aufweist und eine Zusammensetzung aus mit Schwefel vulkanisierbarem Gummi aufweist, die mindestens ein funktionalisiertes oder modifziertes Dienpolymer sowie als verstärkenden Zuschlag Ruß oder eine Mischung aus Ruß und Silizium aufweist, dadurch gekennzeichnet, daß das Dienpolymer so ist, wie in Anspruch 1 umrissen, und daß die genannte Zusammensetzung ausserdem mindestens eine Organosilan-Zusammensetzung aufweist, wie sie im Anspruch 1 umrissen ist.

16. Reifen nach Anspruch 15, dadurch gekennzeichnet, daß die Zusammensetzung in die Ausbildung der Lauffläche eingreift.

17. Lauffläche für einen Reifen, die eine vulkanisierbare Gummizusammensetzung aufweist, die mindestens ein funktionalisiertes oder modifiziertes Dienplymer aufweist, sowie als verstärkenden Zuschlag Ruß oder eine Mischung aus Ruß und Silizium, dadurch gekennzeichnet, daß das Dienpolymer so ist, wie es im Anspruch 1 umrissen ist, und daß die genannte Zusammensetzung außerdem mindestens eine Oragnosilan-Zusammensetzung aufweist, wie sie im Anspruch 1 umrissen ist.

## Claims

1. A sulphur-vulcanisable rubber composition comprising at least one functionalised or modified diene polymer and carbon black or a mixture of carbon black and silica as reinforcing filler, characterised by the fact that the diene polymer is a functionalised polymer bearing at the chain end a silanol function or a polysiloxane block having a silanol end, or modified along the chain by silanol functions, and in that the composition further comprises at least one organosilane compound comprising an amine or imine, function of the general formula I:
Z-R¹-Si(OR²)₃₋ₙ(R³)ₙ
in which:
Z-R¹ represents a primary, secondary or tertiary amine function, whether cyclic or noncyclic, or an imine function or a polyamine radical,
R¹, R², and R³, which may be identical or different, represent an alkyl, aryl, alkaryl or aralkyl group having from 1 to 12 carbon atoms, and preferably having from 1 to 4 carbon atoms,
n is a whole number selected from among the values 0, 1 and 2.

2. A composition according to Claim 1, characterised by the fact that R² represents a methyl or ethyl group.

3. A composition according to any one of Claims 1 or 2, characterised by the fact that the functionalised or modified diene polymer has the general formula II:
P-(SiR'¹R'²O)ₓ-H
in which:
R'¹ and R'², which may be identical or different, represent an alkyl group having from 1 to 8 carbon atoms,
x is a whole number from 1 to 1500, and
P represents the chain of a diene polymer selected from the group represented by any homopolymer obtained by polymerisation of a conjugated diene monomer having from 4 to 12 carbon atoms, and any copolymer of one or more dienes conjugated with each other or with one or more vinyl aromatic compounds, having 8 to 20 carbon atoms.

4. A composition according to any one of Claims 1 to 3, characterised by the fact that it furthermore comprises natural rubber and/or polybutadiene and/or polyisoprene and/or a butadiene-styrene copolymer and/or a butadiene-styrene-isoprene copolymer.

5. A composition according to any one of Claims 1 to 3, characterised by the fact that it furthermore comprises one or more polymers functionalised by bisdialkylaminobenzophenones, thiobenzophenone or chlorotrialkyl tins, or starred by tin tetrachloride.

6. A composition according to any one of Claims 1 to 5, characterised by the fact that the carbon black represents the entire reinforcing filler.

7. A composition according to any one of Claims 1 to 5, characterised by the fact that the reinforcing filler is formed of a mixture of carbon black and silica, which latter may represent up to 70% by weight of the total filler.

8. A composition according to Claim 7, characterised by the fact that the silica is a highly dispersible silica having a CTAB surface ≤ 450 m²/g.

9. A composition according to Claim 8, characterised by the fact that the silica has a BET specific surface area of ≥ 100 and ≤ 300 m²/g, and a ratio of BET specific surface area to CTAB specific surface area of ≥ 1 and ≤1.2.

10. A method of preparing a sulphur-vulcanisable rubber composition according to Claim 1, said composition having improved hysteresis properties and comprising conventional additives which are used in sulphur-vulcanisable diene rubber compositions, characterised in that there is incorporated by thermo-mechanical working, before addition and incorporation of said conventional additives, at least one organosilane compound in accordance with Claim 1 in an elastomer comprising at least one diene polymer in accordance with Claim 1, the reinforcing filler which said composition comprises being added either after said thermo-mechanical working if the reinforcing filler is carbon black or a mixture of carbon black and silica, or before said thermo-mechanical working if the reinforcing filler is carbon black.

11. A method according to Claim 10, characterised in that the organosilane compound is placed in the presence of the functionalised or modified diene elastomer before any thermo-mechanical working, and that the organosilane compound of Formula I is then incorporated in the elastomer by thermo-mechanical working, said reinforcing filler being added after the incorporation of said organosilane compound.

12. A method according to Claim 10, characterised in that the organosilane compound is added to the functionalised or modified diene elastomer after an initial phase of thermo-mechanical working of the functionalised or modified diene elastomer, and in that the organosilane compound of Formula I is incorporated in the functionalised or modified diene elastomer by thermo-mechanical working, said reinforcing filler being added after the incorporation of said organosilane compound.

13. A method according to Claim 10, said composition comprising carbon black as reinforcing filler, characterised in that the functionalised or modified diene elastomer, the organosilane compound of Formula I, and said carbon black are subjected to a first phase of thermo-mechanical working, whereupon the conventional components, with the exception of the vulcanisation system, are added, and that the thermo-mechanical working is continued for an appropriate period of time.

14. A method according to Claim 12, said composition comprising carbon black and silica as reinforcing filler, characterised in that there are added, in succession, to the functionalised or modified diene elastomer which has undergone an initial phase of thermo-mechanical working, in the following order, the organosilane compound of Formula I, then the silica and the bonding agent, then the oil and finally the carbon black with the stearic acid and the antioxidising agent, the elastomer block formed is then recovered and cooled and in a second thermo-mechanical step there are added to the elastomer block of the first step the conventional additives with the exception of the vulcanisation system, that they are incorporated by thermo-mechanical working, that the mixture is recovered, and that, in a finishing step, the vulcanisation system is incorporated and the vulcanisable composition recovered.

15. A tyre having improved rolling resistance, which comprises a sulphur-vulcanisable rubber composition comprising at least one functionalised or modified diene polymer and, by way of reinforcing filler, carbon black or a mixture of carbon black and silica, characterised by the fact that the diene polymer is as defined in Claim 1 and that said composition furthermore comprises at least one organosilane compound as defined in Claim 1.

16. A tyre according to Claim 15, characterised by the fact that the composition enters into the constitution of the tread.

17. A tyre tread which comprises a vulcanisable rubber composition comprising at least one functionalised or modified diene polymer and, by way of reinforcing filler, carbon black or a mixture of carbon black and silica, characterised by the fact that the diene polymer is as defined in Claim 1 and that said composition furthermore comprises at least one organosilane compound as defined in Claim 1.
